# EUROPÄISCHE PATENTSCHRIFT

(11) **EP 4 089 312 B1**
(45) Veröffentlichungstag und Bekanntmachung des Hinweises auf die Patenterteilung: **15.04.2026**
(21) Anmeldenummer: 21179026.6
(22) Anmeldetag: 11.06.2021
(51) Int. Cl.: F16P 3/10, F16P 3/14

(54) **SICHERHEITSEINRICHTUNG UND VERFAHREN ZUM BETRIEB EINER SICHERHEITSEINRICHTUNG**
SAFETY SYSTEM AND METHOD FOR OPERATING A SAFETY SYSTEM
DISPOSITIF DE SÉCURITÉ ET PROCÉDÉ DE FONCTIONNEMENT D'UN DISPOSITIF DE SÉCURITÉ

(30) Priorität: 12.05.2021 EP 21173669
(43) Veröffentlichungstag der Anmeldung: 16.11.2022
(73) Patentinhaber: EUCHNER GmbH + Co. KG, 70771 Leinfelden-Echterdingen (DE)
(72) Erfinder: Wohlfahrt, Matthias, 70794 Filderstadt (DE); Rothenburg, Jens, 72622 Nürtingen (DE); Holz, Richard, 70794 Filderstadt (DE); Mailänder, Joachim, 70199 Stuttgart (DE); Zeiler, Gerd, 70771 Leinfelden-Echterdingen (DE)
(74) Vertreter: Ruckh, Rainer Gerhard

(56) Entgegenhaltungen:
- US-A1- 2007 091 518
- US-A1- 2011 259 060
- US-A1- 2021 048 789
- BERNSTEIN: "Gesamtprogramm Schaltertechnik und Sicherheitstechnik", 1 May 2017 (2017-05-01), online, pages 1 - 172, XP093172684, Retrieved from the Internet <URL:https://www.egonboehler.at/katalog/bernstein-gesamtprogramm-schalter-und-sicherheitstechnik/files/assets/common/downloads/publication.pdf> [retrieved on 20240610]

## Beschreibung

Die Erfindung betrifft eine Sicherheitseinrichtung und ein Verfahren zum Betrieb einer Sicherheitseinrichtung.

Derartige Sicherheitseinrichtungen umfassen einen Sicherheitsschalter und wenigstens einen relativ zum Sicherheitsschalter beweglich angeordneten Betätiger. Die so ausgebildete Sicherheitseinrichtung wird allgemein im Bereich der Sicherheitstechnik eingesetzt. Ein Beispiel für deinen derartigen Einsatz im Bereich der Sicherheitstechnik ist eine Zugangsabsicherung zu einem Gefahrenbereich, wobei der Zugang mit einer Schutztür verschlossen werden kann. In diesem Fall ist der Betätiger typischerweise an der Schutztür angeordnet, während der Sicherheitsschalter an einer den Zugang angrenzenden Rahmenkonstruktion angeordnet ist. Der Begriff Schutztür schließt Türen, Tore, Klappen, Hauben, Deckel, Schwenk- und Schiebetüren, sowie ähnliche Vorrichtungen ein.

Bekannte Sicherheitsschalter weisen ein RFID-System mit einem im Betätiger integrierten Transponder und einer im Sicherheitsschalter integrierten Leseeinheit auf. Mit diesem RFID-System kann die Schließstellung der Schutztür kontrolliert werden. Nur wenn sich die Tür in der Schließstellung befindet, ist der Transponder im Betätiger der Leseeinheit im Sicherheitsschalter räumlich so zugeordnet, dass Transpondersignale des Transponders von der Leseeinheit empfangen werden.

Bei komplexen Anwendungen kann die Sicherheitseinrichtung mehrere dem Sicherheitsschalter zugeordnete Betätiger aufweisen. Beispielsweise können in den Betätigern unterschiedliche Positionen von zu überwachenden Anlagen oder Anlageteilen vorgesehen sein. Beispiele hierfür sind Überwachungseinrichtungen für Drehtische, Rolltore oder auch Roboter. Je nachdem, welcher Betätiger und damit welche Position im Sicherheitsschalter erfasst wird, soll eine Auslösung einer bestimmten Überwachungsfunktion erfolgen, die insbesondere durch eine Sicherheitssteuerung vorgegeben wird.

Ein Problem hierbei ist, dass im Sicherheitsschalter charakteristische Ausgangssignale für die unterschiedlichen in den Betätigern enthaltenen Informationen generiert und der Sicherheitssteuerung zugeführt werden müssen, damit diese die hierfür vorgesehene Überwachungsfunktion ausführen kann. Dieses Problem wird dadurch noch verschärft, dass die Informationen der Betätiger sicher, das heißt fehlersicher an die Sicherheitssteuerung übertragen werden müssen.

Die DE 10 2008 060 004 A1 betrifft einen Sicherheitsschalter zum Erzeugen eines Anlagenfreigabesignals in Abhängigkeit von der Position einer beweglichen Schutztür, mit der ein Gefahrenbereich einer Anlage zugangsgesichert wird, wobei bei Vorliegen des Anlagenfreigabesignals zumindest ein in dem Gefahrenbereich liegender Teil der Anlage betrieben werden kann. Es ist ein Türteil zum Befestigen an der beweglichen Schutztür und ein Rahmenteil zum Befestigen an einem Türgegenstück vorhanden. Ein Betätiger ist zwischen einer ersten und einer zweiten Position verstellbar, wobei eine Ausnehmung vorhanden ist, in die der Betätiger in der zweiten Position eingreifen kann. Ein Sperrglied ist dazu ausgebildet, den Betätiger in der zweiten Position zu blockieren. Ein erster Positionssensor ist dazu ausgebildet, zumindest eine der Positionen des Betätigers eindeutig zu detektieren, um in Abhängigkeit davon das Anlagenfreigabesignal zu erzeugen. Eine Türfreigabeeinheit kann einen Verriegelungszustand und einen Entriegelungszustand einnehmen, wobei in dem Verriegelungszustand eine Blockade des Betätigers durch das Sperrglied in der zweiten Position zugelassen oder aufrechterhalten wird und in dem Entriegelungszustand eine Blockade des Betätigers durch das Sperrglied in der zweiten Position nicht zugelassen oder aufgehoben wird.

Die DE 10 2004 020 997 A1 betrifft eine Sicherheitsschalteinrichtung für eine Sicherheitsschaltung, mit einem Steuerteil zum Verarbeiten eines Eingangssignals und mit zumindest einem Schaltelement, das zumindest einen aktiven und einen inaktiven Schaltzustand besitzt, wobei der Steuerteil dazu ausgebildet ist, das Schaltelement anzusteuern, um ein vom Eingangssignal abhängiges Ausgangssignal an einem Ausgang zu erzeugen. Weiterhin ist eine Diagnosefunktionalität zum Erkennen eines Funktionsfehlers vorhanden, wobei der Steuerteil dazu ausgebildet ist, das Schaltelement in den inaktiven Zustand zu steuern, wenn ein Funktionsfehler erkannt ist. Der Steuerteil ist ferner dazu ausgebildet, ein Datentelegramm an dem Ausgang zu erzeugen, das von dem erkannten Funktionsfehler abhängt.

Die EP 3 779 899 A1 betrifft eine Kontrollvorrichtung für ein mittels einer Steuerung gesteuertes System mit einer Auswerteeinheit und wenigstens einer Erfassungseinheit, die an die Auswerteeinheit angeschlossen ist. Abhängig von in der Erfassungseinheit eingegebenen Eingabegrößen ist in der Auswerteeinheit eine Betriebsartauswahl durchführbar und/oder eine Zugangsberechtigung zuteilbar. Dadurch generierte Ausgangsgrößen sind über eine Ausgangsstufe an die Steuerung ausgebbar.

In Bernstein: "Gesamtprogramm Schaltertechnik und Sicherheitstechnik", 1. Mai 2027 (2017-05-01), Seiten 1-172, XP093172684, online ist eine Reihenschaltung von Sicherheitsschaltern in einem AS-Inface Bussystem beschrieben.

Der Erfindung liegt die Aufgabe zugrunde eine Sicherheitseinrichtung der eingangs genannten Art bereitzustellen, welche bei geringem konstruktiven Aufwand komplexe Überwachungsfunktion realisiert werden können.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sicherheitseinrichtung mit einem Sicherheitsschalter, einer Anordnung von dem Sicherheitsschalter zugeordneten Betätigern und mit einer Sicherheitssteuerung. Der Sicherheitsschalter ist ausgebildet, Betätigerdaten aus jedem zugeordneten Betätiger einzulesen und in Abhängigkeit der Daten des Betätigers Sicherheitsschaltsignale zu generieren und an die Sicherheitssteuerung auszugeben. Der Sicherheitsschalter weist eine sichere Ausgangsstruktur in Form einer sicheren seriellen Schnittstelle oder einer sicheren Busschnittstelle auf, über welche sämtliche Ausgangssignale ausgegeben werden.

Die Erfindung betrifft weiterhin ein Verfahren zum Betrieb einer Sicherheitseinrichtung.

Die erfindungsgemäße Sicherheitseinrichtung umfasst einen Sicherheitsschalter, welchem eine Anordnung von Betätigern zugeordnet ist, wobei im einfachsten Fall auch nur ein Betätiger vorgesehen sein kann.

Die erfindungsgemäße Sicherheitseinrichtung wird im Bereich der Sicherheitstechnik, das heißt im Bereich der Maschinensicherheit eingesetzt. Dabei generiert die Sicherheitseinrichtung eine Sicherheitsfunktion, insbesondere zur Überwachung einer Anlage oder eines Gefahrenbereichs an einer Anlage. Die Sicherheitsfunktion wird dadurch realisiert, dass der Sicherheitsschalter abhängig davon ob dieser einen zugeordneten Betätiger erkennt, ein Sicherheitsschaltsignal generiert, das an eine Sicherheitssteuerung ausgegeben wird, die den Betrieb der Anlage steuert und/oder kontrolliert. Insbesondere wird, wenn im Sicherheitsschalter der Betätiger erkannt wird, im Sicherheitsschalter als Sicherheitsschaltsignal ein Freigabesignal generiert, mit dem der Betrieb der Anlage über die Sicherheitssteuerung freigegeben wird.

Vorteilhaft weist jeder Betätiger einen Transponder auf. Im Sicherheitsschalter befindet sich dann eine RFID-Leseeinheit. Hat sich ein Betätiger dem Sicherheitsschalter so weit genähert, dass sich der Transponder innerhalb des Lesebereichs der RFID-Leseeinheit befindet, werden mit dieser die im Transponder gespeicherten Betätigerdaten ausgelesen.

Erfindungsgemäß weist der Sicherheitsschalter eine sichere Ausgangsstruktur in Form einer sicheren seriellen Schnittstelle oder einer sicheren Busschnittstelle auf, über welche nicht nur das Sicherheitsschaltsignal sondern alle weiteren Ausgangssignale ausgegeben werden. Die Ausgangssignale werden über die sichere Ausgangsstruktur fehlersicher vom Sicherheitsschalter an die Sicherheitssteuerung ausgegeben. Dies ist insbesondere für die Ausgabe des Sicherheitsschaltsignals wesentlich. Da mit den vom Sicherheitsschalter ausgegebenen Sicherheitsschaltsignalen eine Sicherheitsfunktion in der Sicherheitssteuerung ausgelöst wird, muss zur Erfüllung der hierfür geltenden Sicherheitsanforderungen die Ausgabe und Übertragung des Sicherheitsschaltsignals fehlersicher sein.

Ein wesentlicher Vorteil der Erfindung besteht darin, dass neben den Sicherheitsschaltsignalen auch alle anderen Ausgangssignale über die sichere Ausgangsstruktur ausgegeben werden, so dass auch für diese, ohne jeglichen weiteren Aufwand, eine fehlersichere Ausgabe und Übertragung gewährleistet ist, natürlich unabhängig davon, ob es sich bei den weiteren Ausgangssignalen um sicherheitsrelevante Größen handelt oder nicht. Weitere Ausgangssignale können Meldesignale, Betätigermerkmale oder Signale für Anzeigen sein.

Die Fehlersicherheit der sicheren Ausgangsstruktur, das heißt der sicheren seriellen Schnittstelle oder der sicheren Busschnittstelle, kann zum einen dadurch gewährleistet werden, dass die über die sichere Ausgangsstruktur übertragenen Informationen durch sichere Kennungen wie zum Beispiel Prüfsummen abgesichert werden, die den Informationen sendeseitig aufgeprägt und empfangsseitig kontrolliert werden, insbesondere durch einen Vergleich mit vorgegebenen Erwartungshaltungen. Alternativ oder zusätzlich können sendeseitig und/oder empfangsseitig redundante, insbesondere zweikanalige Rechnerstrukturen vorgesehen sein, wobei durch einen mehrkanaligen Vergleich von zu sendenden beziehungsweise von empfangenen Informationen eine Fehlerkontrolle erfolgt.

Die Datenübertragung über die sichere Ausgangsstruktur kann im Allgemeinen einkanalig erfolgen. Insbesondere können bekannte Sicherheitsbussysteme wie zum Beispiel IO-Link Safety oder auch eine zweikanalige Datenübertragung zum Einsatz kommen.

Gemäß einer vorteilhaften Ausführungsform enthalten die Betätigerdaten jedes Betätigers Identifikationsdaten anhand derer der Betätiger im Sicherheitsschalter sicher identifizierbar ist.

Dadurch, dass die Betätiger anhand ihrer Betätigerdaten sicher, das heißt fehlersicher identifiziert werden, wird die Fehlersicherheit der gesamten Sicherheitseinrichtung erhöht.

Eine derartige Fehlersicherheit wird beispielsweise dadurch realisiert, dass die als Codes vorliegenden Betätigerdaten über Prüfnummern, Prüfsummen und dergleichen abgesichert sind, wobei bei Einlesen der Betätigerdaten eines Betätigers in den Sicherheitsschalter die Prüfnummern beziehungsweise Prüfsummen mit vorgegebenen Erwartungshaltungen verglichen werden.

Weiterhin ist wesentlich, dass die Betätiger anhand ihrer Identifikationsdaten eindeutig identifiziert, das heißt auch voneinander unterschieden werden, so dass Verwechslungen, die zu Fehlfunktionen der Sicherheitseinrichtung führen könnten, vermieden werden.

Gemäß einer vorteilhaften Ausführungsform kann anhand von eingelesenen Betätigerdaten eines Betätigers im Sicherheitsschalter ermittelt werden, ob dieser Betätiger ein zulässiger oder unzulässiger Betätiger ist.

Vorteilhaft sind Teildaten der Betätigerdaten, die in Form von Bitfolgen vorliegen, derart ausgebildet, dass diese eine Betätigerfunktion definieren. Beispielsweise kann dort als Funktion definiert sein, ob mit dem Betätiger eine trennende Schutzeinrichtung wie eine Schutztür überwacht wird, wobei hierfür nur ein Betätiger erforderlich ist. Weiterhin kann eine Funktion derart sein, dass ein Betätiger Überwachungsaufgaben an einem Drehtisch wahrnimmt, wobei hier mehrere Betätiger eingesetzt werden.

Insbesondere werden neue Sicherheitsfunktionen möglich, indem durch die eindeutige, sichere Identifikation eines bestimmten Betätigers oder einer bestimmten Betätigergruppe durch die Steuerung eine Umschaltung sicherheitsrelevanter Maschinenfunktionen in Abhängigkeit der sicheren Betätigerdaten erfolgen kann. Die geringste Mitgliederanzahl dieser Betätigergruppe kann ein einzelner Betätiger sein.

Wird ein Betätiger im Sicherheitsschalter anhand der Betätigerdaten als zulässig erkannt und damit akzeptiert, so kann abhängig von den Betätigerdaten dieses Betätigers das Sicherheitsschaltsignal generiert und an die Sicherheitssteuerung ausgegeben werden, wodurch eine entsprechende Sicherheitsfunktion ausgelöst wird.

Wird dagegen ein Betätiger im Sicherheitsschalter anhand der Betätigerdaten als unzulässig erkannt und damit abgelehnt, so kann abhängig von den Betätigerdaten dieses Betätigers im Sicherheitsschalter kein Sicherheitsschaltsignal generiert werden.

Insbesondere bei Funktionen, in welchen mehrere Betätiger zur Erfüllung von Überwachungsaufgaben eingesetzt werden, ist es zweckmäßig, dass mehrere Betätiger anhand gleicher Teildaten in deren Betätigerdaten im Sicherheitsschalter als zulässig akzeptiert werden.

Vorteilhaft sind Betätiger einzeln oder in Gruppen im Sicherheitsschalter einlernbar.

Das Einlernen der Betätiger kann innerhalb eines Einlernbetriebs, insbesondere bei Power Up des Sicherheitsschalters erfolgen. Die eingelernten Betätiger sind dann für die jeweilige Applikation zugeordnet.

Wird beispielsweise mit der Sicherheitseinrichtung der Schließzustand einer Schutztür als Zugang zu einem Gefahrenbereich überwacht, wird an der Schutztür ein Betätiger angebracht, und dann vom Sicherheitsschalter eingelernt, wobei der Betätiger anhand seiner Identifikationsdaten eindeutig identifiziert wird. Nach dem Einlernvorgang kann dann nur dieser Betätiger für die Überwachung der Schutztür verwendet werden.

Das Einlernen von Betätigern einer Gruppe kann dadurch erleichtert sein, dass ein Teil der Betätigerdaten für alle Mitglieder der Gruppe identisch sind. Dann ist es möglich, dass nur ein Betätiger als Stellvertreter für die Gruppe eingelernt werden muss, wodurch alle anderen Betätiger der Gruppe automatisch eingelernt sind.

In einer einfachen Ausführungsform kann der Schalter jeden Betätiger akzeptieren und die ab Werk im Betätiger enthaltenen, sicheren Daten sicher an die Steuerung weiterleiten.

Gemäß einer vorteilhaften Ausführungsform der Erfindung enthalten die Betätigerdaten eines Betätigers Informationen über Eigenschaften und/oder den Zustand des mit diesem Betätiger versehenen Gegenstands.

Beispielsweise können diese Informationen enthalten, ob der Betätiger an einer Schutztür, einem Drehtisch oder einer Ablagestation für Roboter angeordnet ist.

Drehtische müssen in vorgegebenen Positionen stehen, damit vorgegebene Arbeitsvorgänge durchführbar sind. Für eine derartige Positionsüberwachung werden Betätiger eingesetzt.

Weiterhin können Ablagepositionen in Ablagestationen für Roboter mittels Betätigern überwacht werden, um Fehlzuordnungen zu vermeiden.

Auch ist es möglich mittels Betätigern den Wechsel von Roboterwerkzeugen zu überwachen.

Ein weiteres Anwendungsbeispiel ist die sichere Identifikation von Behältnissen.

In diesen Fällen können Informationen über die Beschaffenheiten der jeweiligen Objekte, Positionen der Objekte oder auch kundenspezifische Informationen in den Betätigerdaten enthalten sein. Auch kann die Anzahl gültiger Kopien eines Betätigers in den Betätigerdaten hinterlegt sein.

Die in den Sicherheitsschaltern eingelesenen Betätigerdaten derartiger Betätiger liefern somit umfangreiche Informationen über die jeweilige Applikation.

Gemäß einer vorteilhaften Ausführungsform ist anhand von Betätigerdaten eines Betätigers, die in den Sicherheitsschalter eingelesen werden, dessen Arbeitsweise und/oder dessen Betriebszustand vorgebbar.

Der Betätiger übernimmt somit durch das Einlernen der Betätigerdaten in den Sicherheitsschalter eine Steuerungsfunktion mit dem der Betrieb des Sicherheitsschalters verändert beziehungsweise eingestellt werden kann.

Dies führt zu einer erheblichen Vereinfachung der Herstellung der Sicherheitsschalter, da bei deren Fertigung keine Vielzahl unterschiedlicher Varianten festgelegt und in der Lagerhaltung vorgehalten werden muss. Vielmehr kann die Arbeitsweise und/oder der Betriebszustand über die Betätigerdaten von Betätigern festgelegt werden. Die Anzahl von Betätigern, die für eine Betriebsarteinrichtung der Sicherheitsschalter verwendet werden können, ist dabei frei wählbar. Dabei können diese Betätiger auch im Arbeitsbetrieb der Sicherheitseinrichtung zur Durchführung der Überwachungsfunktionen eingesetzt werden.

Die einzustellende Arbeitsweise der Sicherheitsschalter kann beispielsweise darin bestehen, welche Betätigerart von Sicherheitsschaltern akzeptiert wird, wie die Datenverarbeitung im Sicherheitsschalter erfolgt, welche Anzeigen vorgesehen sind und dergleichen.

Ein weiteres Beispiel für eine einzustellende Arbeitsweise kann sein, dass verschiedene Betätiger und/oder Betätigergruppen eingelernt werden, wobei der Sicherheitsschalter diese anhand der (Teil-)Betätigerdaten akzeptiert und unterscheidet und dann unterschiedliche Verhaltensweisen zeigt.

Insbesondere kann durch die Betätigerdaten im Sicherheitsschalter die Anzahl von akzeptierten Betätigern vorgegeben oder geändert sein.

Weiterhin kann durch die Betätigerdaten im Sicherheitsschalter vorgebbar sein, welche Informationen von Betätigerdaten von Betätigern akzeptiert werden.

Schließlich können durch die Betätigerdaten Ausgangssignale vorgebbar sein, die vom Sicherheitsschalter über die sichere Ausgangsstruktur ausgegeben werden.

Gemäß einer vorteilhaften Ausgestaltung werden über die sichere Ausgangsstruktur des Sicherheitsschalters Betätigerdaten, Teile von Betätigerdaten und/oder im Sicherheitsschalter aus Betätigerdaten abgeleitete Daten an die Sicherheitssteuerung übertragen.

Damit stehen Betätigerdaten oder Teile hiervon auch in den Sicherheitsschaltern zur Verfügung. Auch ist es möglich im Sicherheitsschalter abhängig von den Betätigerdaten Auswertungen vorzunehmen und die erhaltenen Resultate in die Sicherheitssteuerung zu übertragen.

Die so übertragenen Daten können explizite Informationen darstellen, die unmittelbar von der Sicherheitssteuerung genutzt werden können, beispielsweise um Auswertungen vorzunehmen, Fehlerkontrollen durchzuführen, Anzeigen anzusteuern oder dergleichen.

Alternativ kann die Sicherheitssteuerung anhand der übertragenen Daten hinterlegte Informationen abrufen um damit bestimmte Verarbeitungsprozesse durchzuführen.

Im Allgemeinen werden nur Betätigerdaten oder daraus abgeleitete Informationen vom Sicherheitsschalter an die Sicherheitssteuerung übertragen, die von als zulässig erkannten Betätigern stammen.

Generell ist es auch möglich Betätigerdaten von unzulässigen Betätigern in Sicherheitsschaltern zu lesen und, gegebenenfalls verbunden mit Warnmeldungen, an die Sicherheitssteuerung weiterzuleiten.

Die Funktionalität der erfindungsgemäßen Sicherheitseinrichtung kann dadurch noch erweitert werden, dass mittels des Sicherheitsschalters, der Sicherheitssteuerung und/oder einer separaten Schreibstation Informationen in einen Betätiger fehlersicher eingeschrieben werden können.

Die Schreibstation kann beispielsweise von einem Personal Computer gebildet sein, der mit dem Sicherheitsschalter verbunden wird.

Die Einschreibvorgänge können vor Inbetriebnahme der Sicherheitseinrichtung oder auch während deren Betriebs erfolgen.

Mit den Einschreibvorgängen können Dateninhalte von Betätigerdaten flexibel geändert oder erweitert werden. So können auch im laufenden Betrieb der Sicherheitseinrichtung Informationen in den Betätiger geschrieben werden, die an einer anderen Stelle für die Steuerung der gesamten Anlage relevant sind. Auf diese Weise ist es möglich, dass zwar an einer Stelle der Anlage ein Sicherheitsschalter angebracht ist, jedoch die Informationen dieses Sicherheitsschalters an einer weiteren Stelle der Anlage mit einem weiteren Sicherheitsschalter genutzt werden kann.

Gemäß einer vorteilhaften Weiterbildung der Erfindung umfasst die Sicherheitseinrichtung mehrere Sicherheitsschalter, die in einem sicheren Bussystem integriert sind. Die sicheren Ausgangsstrukturen der Sicherheitsschalter sind dann von sicheren Busschnittstellen gebildet, die zum Anschluss an das Bussystem dienen. Den Sicherheitsschaltern werden dann Adressen zugewiesen, unter welchen diese ein Bussystem, beispielsweise von einem Master angesprochen werden können. Beispiele für derartige sichere Bussysteme sind PROFIsafe, IO-Link Safety oder CIP Safety.

Die Erfindung wird im Folgenden anhand der Zeichnungen erläutert. Es zeigen:
- Figur 1:: Schematische Darstellung eines Ausführungsbeispiels der erfindungsgemäßen Sicherheitseinrichtung.
- Figur 2:: Einzeldarstellung eines Sicherheitsschalters mit einem zugeordneten Betätiger für die Sicherheitseinrichtung gemäß Figur 1.
- Figur 3:: Erstes Anwendungsbeispiel für die Sicherheitseinrichtung gemäß Figur 1.
- Figur 4:: Zweites Anwendungsbeispiel für die Sicherheitseinrichtung gemäß Figur 1.
- Figur 5:: Drittes Anwendungsbeispiel für die Sicherheitseinrichtung gemäß Figur 1.

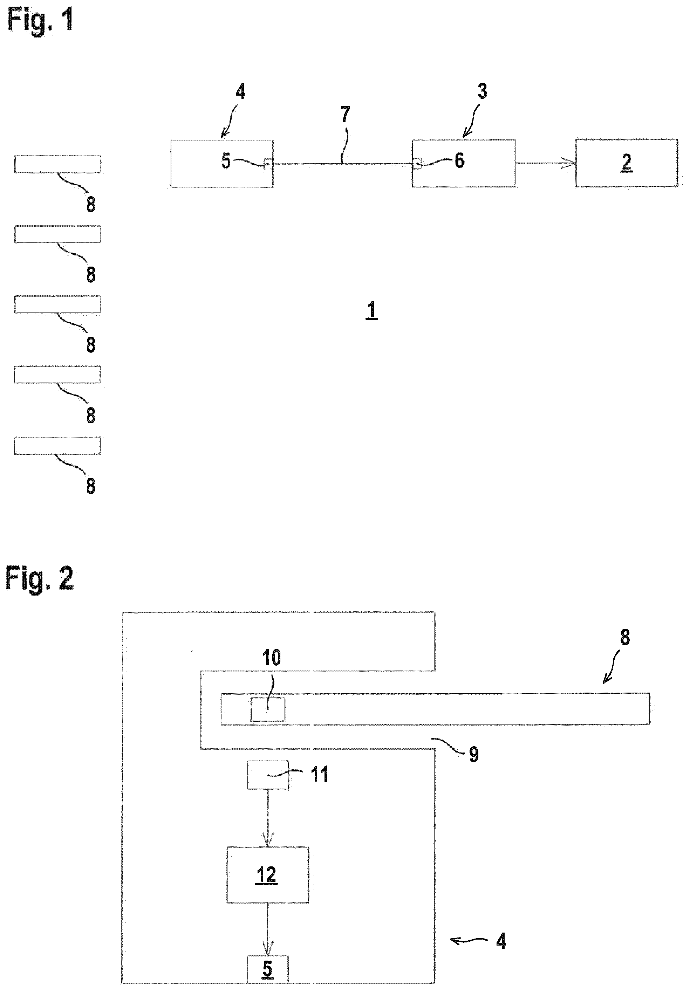

Figur 1 zeigt ein Ausführungsbeispiel der erfindungsgemäßen Sicherheitseinrichtung 1. Die Sicherheitseinrichtung 1 dient zur Überwachung und Absicherung einer Anlage 2 von welcher Gefahren für Personen ausgehen können.

Die Anlage 2 wird mittels einer Sicherheitssteuerung 3 gesteuert. Die Sicherheitssteuerung 3 weist einen fehlersicheren Aufbau auf, welcher insbesondere durch einen mehrkanaligen Aufbau, insbesondere durch zwei sich gegenseitig überwachende Rechnereinheiten 12 realisiert wird.

Die Sicherheitseinrichtung 1 weist weiterhin einen Sicherheitsschalter 4 auf.

Erfindungsgemäß weist der Sicherheitsschalter 4 eine sichere Ausgangsstruktur 5 in Form einer sicheren seriellen Schnittstelle oder einer sicheren Busschnittstelle auf. Die Sicherheitssteuerung 3 weist eine hierzu korrespondierende Schnittstelle 6 auf. Dadurch wird zwischen dem Sicherheitsschalter 4 und der Sicherheitssteuerung 3 eine sichere Datenübertragungsstrecke 7 gebildet.

Über die sichere Ausgangsstruktur 5 werden fehlersicher Ausgangssignale des Sicherheitsschalters 4 in die Sicherheitssteuerung 3 übertragen. Prinzipiell kann die Datenübertragungsstrecke 7 bidirektional ausgebildet sein.

Die Fehlersicherheit der sicheren Ausgangsstruktur 5, das heißt der sicheren seriellen Schnittstelle oder der sicheren Busschnittstelle, kann zum einen dadurch gewährleistet werden, dass die über die sichere Ausgangsstruktur 5 übertragenen Informationen durch sichere Kennungen wie zum Beispiel Prüfnummern oder Prüfsummen abgesichert werden, die den Informationen sendeseitig aufgeprägt und empfangsseitig kontrolliert werden, insbesondere durch einen Vergleich mit vorgegebenen Erwartungshaltungen. Alternativ oder zusätzlich können sendeseitig und/oder empfangsseitig redundante, insbesondere zweikanalige Rechnerstrukturen vorgegeben sein, wobei durch einen mehrkanaligen Vergleich von zu sendenden beziehungsweise von empfangenen Informationen eine Fehlerkontrolle erfolgt.

Die Datenübertragung über die sichere Ausgangsstruktur 5 kann im Allgemeinen einkanalig erfolgen. Insbesondere können bekannte Sicherheitsbussysteme wie zum Beispiel IO-Link Safety oder auch eine zweikanalige Datenübertragung zum Einsatz kommen.

Wie Figur 1 zeigt ist dem Sicherheitsschalter 4 eine Anordnung von Betätigern 8 als weiteren Bestandteilen der Sicherheitseinrichtung 1 zugeordnet.

In Abhängigkeit von Betätigerdaten eines Betätigers 8, die in den Sicherheitsschalter 4 eingelesen werden, generiert der Sicherheitsschalter 4 ein Sicherheitsschaltsignal, das erfindungsgemäß über die sichere Ausgangsstruktur 5 ausgegeben wird. Mit dem Sicherheitsschaltsignal wird in der Sicherheitssteuerung 3 eine Sicherheitsfunktion ausgelöst. Insbesondere wird dann, wenn im Sicherheitsschalter 4 anhand der Betätigerdaten ein gültiges Signal erkannt wird, als Sicherheitsschaltsignal ein Freigabesignal generiert, mit dem der Betrieb der Anlage 2 freigegeben wird.

Figur 2 zeigt eine Einzeldarstellung des Sicherheitsschalters 4 mit einem Betätiger 8. Dabei zeigt Figur 2 die Situation, wenn sich der Betätiger 8 im Ansprechbereich des Sicherheitsschalters 4 befindet. Dies ist im vorliegenden Fall dadurch gegeben, dass der Betätiger 8 in eine Ausnehmung 9 im Sicherheitsschalter 4 eingefahren ist. Das Vorsehen einer solchen Ausnehmung 9 ist jedoch nicht zwingend erforderlich.

Bei einem in die Ausnehmung 9 des Sicherheitsschalters 4 eingeführten Betätiger 8 befindet sich ein Transponder 10 im Betätiger 8 im Ansprechbereich einer RFID-Leseeinheit 11 des Sicherheitsschalters 4, so dass von der RFID-Leseeinheit 11 im Transponder 10 gespeicherte Daten ausgelesen und in einer Rechnereinheit 12 des Sicherheitsschalters 4 verarbeitet werden. Die Rechnereinheit 12 ist mit der sicheren Ausgangsstruktur 5 verbunden.

Die Betätigerdaten der Betätiger 8 liegen in Form von Codes vor, die durch Prüfsummen abgesichert sind. Anhand der Betätigerdaten kann im Sicherheitsschalter 4 der jeweilige Betätiger 8 eindeutig identifiziert werden. Durch Vergleich der Prüfsummen mit einer vorgegebenen Erwartungshaltung, das heißt abgespeicherten Sollwerten, erfolgt die Identifikation fehlersicher.

Weiterhin wird anhand der Betätigerdaten im Sicherheitsschalter 4 ermittelt, ob ein zulässiger oder unzulässiger Betätiger 8 vorliegt, wobei nur in Abhängigkeit von Betätigerdaten eines zulässigen Betätigers 8 im Sicherheitsschalter 4 Sicherheitsschaltsignale für die Sicherheitssteuerung 3 generiert werden.

Insbesondere werden mehrere Betätiger 8 anhand gleicher Teildaten in deren Betätigerdaten im Sicherheitsschalter 4 als zulässig akzeptiert.

Als unzulässig erkannte Betätiger 8 werden somit im Sicherheitsschalter 4 abgelehnt, so dass deren Betätigerdaten kein Sicherheitsschaltsignal generieren können.

Vorteilhaft enthalten die Betätigerdaten eines Betätigers 8 Informationen über Eigenschaften und/oder den Zustand des mit diesem Betätiger 8 versehenen Gegenstands.

Dadurch liegen durch Einlernen der Betätigerdaten umfangreiche Informationen über die jeweilige Applikation im Sicherheitsschalter 4 vor.

Die Funktionalität der Sicherheitseinrichtung 1 ist dadurch erweitert, dass anhand von Betätigerdaten eines Betätigers 8, die in den Sicherheitsschalter 4 eingelesen werden, dessen Arbeitsweise und/oder dessen Betriebszustand vorgebbar ist.

Damit kann der Sicherheitsschalter 4 über die Betätigerdaten konfiguriert und für eine bestimmte Applikation angepasst werden. Insbesondere kann durch diese Konfiguration festgelegt werden, welche Betätigerwerte vom Sicherheitsschalter 4 akzeptiert werden, das heißt welche Betätiger 8 vom Sicherheitsschalter 4 als zulässig erkannt werden.

Der oder die Betätiger 8, die zur Konfiguration der Sicherheitsschalter 4 verwendet werden, können auch im darauffolgenden Arbeitsbetrieb zur Durchführung von Überwachungsfunktionen eingesetzt werden, indem abhängig von den Betätigerdaten dieser Betätiger 8 das Sicherheitsschaltsignal im Sicherheitsschalter 4 generiert wird.

Eine weitere Erhöhung der Funktionalität der erfindungsgemäßen Sicherheitseinrichtung 1 besteht darin, dass von einem Betätiger 8 in den Sicherheitsschalter 4 eingelesene Betätigerdaten oder Teile von Betätigerdaten über die sichere Ausgangsstruktur 5 der Sicherheitssteuerung 3 zugeführt werden. Weiterhin ist es möglich, dass in dem Sicherheitsschalter 4 eine Verarbeitung von Betätigerdaten vorgenommen wird und die Ergebnisse der Verarbeitung an die Sicherheitssteuerung 3 übertragen werden.

Die übertragenen Daten können insbesondere Informationen über die jeweilige Applikation enthalten, beispielsweise Informationen über die Eigenschaften oder Zustand eines Gegenstands, mit welchem der Betätiger 8 versehen ist.

Die vom Sicherheitsschalter 4 an die Sicherheitssteuerung 3 übertragenen Daten können explizite, unmittelbar von der Sicherheitssteuerung 3 auswertbare Informationen enthalten. Auch ist es möglich, dass die Sicherheitssteuerung 3 anhand der übertragenen Daten hinterlegte Informationen abruft und diese dann auswertet oder verarbeitet.

Die Sicherheitseinrichtung 1 gemäß Figur 1 kann dahingehend erweitert sein, dass Informationen in die Betätiger 8 eingeschrieben werden können, so dass nicht nur ein Informationstransfer von den Betätigern 8 in den Sicherheitsschalter 4 sondern auch in umgekehrter Richtung möglich ist. Das Einschreiben der Daten kann mittels der Sicherheitsschalter 4, der Sicherheitssteuerung 3 oder einer separaten Schreibstation in Form eines Personal Computers oder dergleichen erfolgen. Insbesondere kann der Sicherheitsschalter 4 mit einem Personal Computer oder dergleichen verbunden sein und so als Schreibstation genutzt werden.

Schließlich ist eine Erweiterung der Sicherheitseinrichtung 1 dahingehend möglich, dass mehrere Sicherheitsschalter 4 vorgesehen sind, die in einem sicheren Bussystem integriert sind.

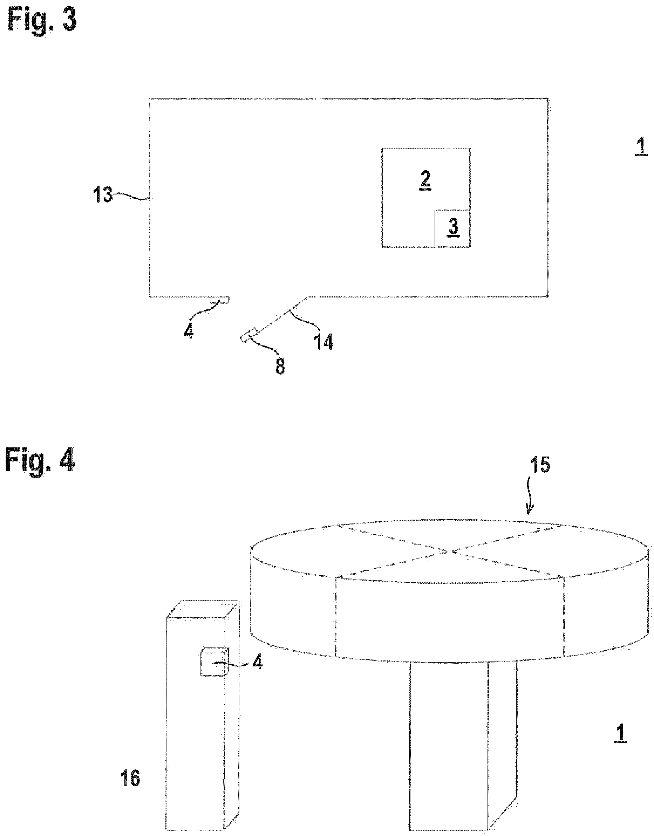

Figur 3 zeigt ein erstes Anwendungsbeispiel für die Sicherheitseinrichtung 1 gemäß Figur 1. Bei diesem Beispiel ist der Gefahrenbereich einer Anlage 2 mit einer Umzäunung 13 gesichert. Der Zugang zum Gefahrenbereich erfolgt über eine in die Umzäunung 13 integrierte Schutztür 14. Der Sicherheitsschalter 4 ist ortsfest an einem Rahmen der Umzäunung 13 angeordnet. An der Schutztür 14 befindet sich ein Betätiger 8, der in einem Einlernvorgang im Sicherheitsschalter 4 eingelernt wird. Nach diesem Einlernen kann nun auch dieser Betätiger 8 für diese Sicherheitseinrichtung 1 verwendet werden.

Befindet sich die Schutztür 14 in ihrer Schließstellung, befindet sich der Transponder 10 des Betätigers 8 im Lesebereich der RFID-Leseeinheit 11 des Sicherheitsschalters 4 und die Betätigerdaten des Betätigers 8 werden in den Sicherheitsschalter 4 übertragen. Daraufhin generiert der Sicherheitsschalter 4 als Sicherheitsschaltsignal ein Freigabesignal, durch das der Betrieb der Anlage 2 über die Sicherheitssteuerung 3 freigegeben wird. Bei offener Schutztür 14 ist der Betrieb der Anlage 2 nicht freigegeben, da sich der Transponder 10 des Betätigers 8 außerhalb des Lesebereichs der RFID-Leseeinheit 11 befindet.

Figur 4 zeigt ein weiteres Anwendungsbeispiel der Sicherheitseinrichtung 1. Mit dieser Sicherheitseinrichtung 1 wird eine Anlagenabsicherung für einen Drehtisch 15, dem eine Kontrolleinheit 16 zugeordnet ist, durchgeführt. Die einzelnen Drehpositionen des Drehtisches 15 werden mit nicht dargestellten Betätigern 8 überwacht, die mit einem Sicherheitsschalter 4 zusammen wirken.

Wie Figur 4 zeigt, ist ein Sicherheitsschalter 4 in der Kontrolleinheit 16 vorgesehen. Die nicht dargestellten Betätiger 8 sind im Drehtisch 15 angeordnet und kennzeichnen die einzelnen Positionen des Drehtisches 15.

Die Betätiger 8 des Drehtisches 15 bilden eine Gruppe von Betätigern 8, die einen übereinstimmenden Teil von Betätigerdaten aufweisen, die in einem Einlernvorgang eingelernt werden. Dabei reicht es aus, einen Betätiger 8 stellvertretend für die gesamte Gruppe anhand des übereinstimmenden Teils der Betätigerdaten einzulernen.

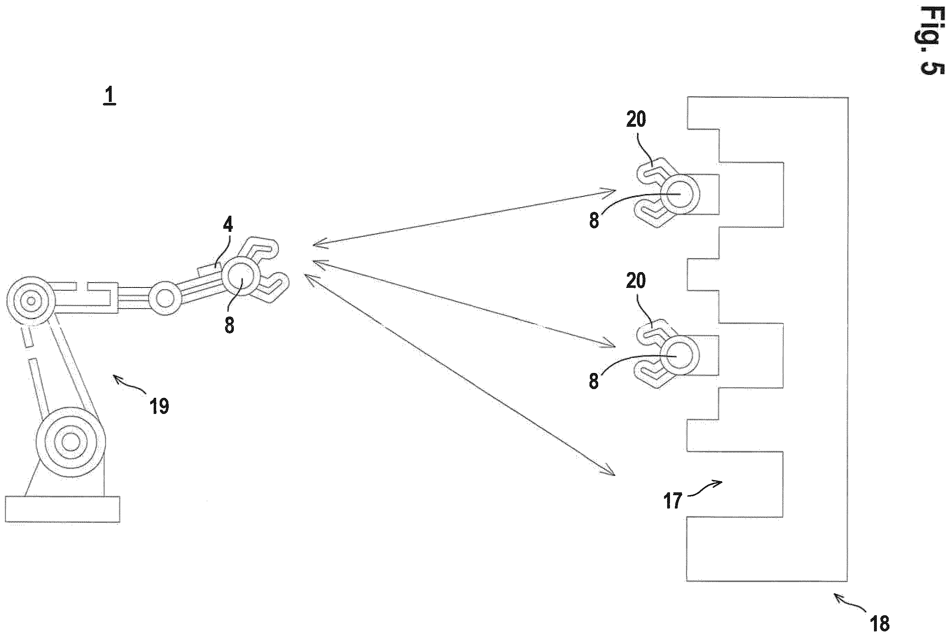

Figur 5 zeigt ein weiteres Anwendungsbeispiel der Sicherheitseinrichtung 1. In diesem Fall sind Ablageplätze 17 einer Ablagestation 18 vorgesehen, in welchen mittels eines Roboters 19 Werkzeuge 20 abgelegt oder aus diesen entnommen werden können. Dies wird mit der erfindungsgemäßen Sicherheitseinrichtung 1 kontrolliert, wobei hierzu an einem Arm des Roboters 19 ein Sicherheitsschalter 4 und an den Werkzeugen 20 Betätiger 8 vorgesehen sind.

### Bezugszeichenliste

- (1): Sicherheitseinrichtung
- (2): Anlage
- (3): Sicherheitssteuerung
- (4): Sicherheitsschalter
- (5): Sichere Ausgangsstruktur
- (6): Schnittstelle
- (7): Datenübertragungsstrecke
- (8): Betätiger
- (9): Ausnehmung
- (10): Transponder
- (11): RFID-Leseeinheit
- (12): Rechnereinheit
- (13): Umzäunung
- (14): Schutztür
- (15): Drehtisch
- (16): Kontrolleinheit
- (17): Ablageplatz
- (18): Ablagestation
- (19): Roboter
- (20): Werkzeug

## Patentansprüche

1. Sicherheitseinrichtung (1) mit einem Sicherheitsschalter (4), einer Anordnung von dem Sicherheitsschalter (4) zugeordneten Betätigern (8) und mit einer Sicherheitssteuerung (3), wobei der Sicherheitsschalter (4) ausgebildet ist Betätigerdaten aus jedem zugeordneten Betätiger (8) einzulesen und in Abhängigkeit der Daten des Betätigers (8) Sicherheitsschaltsignale zu generieren und an die Sicherheitssteuerung (3) auszugeben, **dadurch gekennzeichnet, dass** der Sicherheitsschalter (4) eine sichere Ausgangsstruktur (5) in Form einer sicheren seriellen Schnittstelle oder einer sicheren Busschnittstelle aufweist, über welche sämtliche Ausgangssignale ausgegeben werden.

2. Sicherheitseinrichtung (1) nach Anspruch 1, **dadurch gekennzeichnet, dass** die Betätigerdaten jedes Betätigers (8) Identifikationsdaten enthalten anhand derer der Betätiger (8) im Sicherheitsschalter (4) sicher identifizierbar ist.

3. Sicherheitseinrichtung (1) nach Anspruch 1, **dadurch gekennzeichnet, dass** anhand der Betätigerdaten im Sicherheitsschalter (4) ermittelt wird, ob ein zulässiger oder unzulässiger Betätiger (8) vorliegt, wobei nur in Abhängigkeit von Betätigerdaten eines zulässigen Betätigers (8) im Sicherheitsschalter (4) Sicherheitsschaltsignale für die Sicherheitssteuerung (3) generiert werden.

4. Sicherheitseinrichtung (1) nach Anspruch 3, **dadurch gekennzeichnet, dass** mehrere Betätiger (8) anhand gleicher Teildaten in deren Betätigerdaten im Sicherheitsschalter (4) als zulässig akzeptiert werden.

5. Sicherheitseinrichtung (1) nach einem der Ansprüche 1 bis 4, **dadurch gekennzeichnet, dass** Betätiger (8) einzeln oder in Gruppen im Sicherheitsschalter (4) einlernbar sind.

6. Sicherheitseinrichtung (1) nach Anspruch 5, **dadurch gekennzeichnet, dass** bei einer Gruppe von Betätigern (8) ein Teil der Betätigerdaten übereinstimmt, und dass nur ein Betätiger (8) stellvertretend für die gesamte Gruppe eingelernt wird.

7. Sicherheitseinrichtung (1) nach einem der Ansprüche 1 bis 6, **dadurch gekennzeichnet, dass** die Betätigerdaten eines Betätigers (8) Informationen über Eigenschaften und/oder den Zustand des mit diesem Betätiger (8) versehenen Gegenstands enthalten.

8. Sicherheitseinrichtung (1) nach einem der Ansprüche 1 bis 7, **dadurch gekennzeichnet, dass** anhand von Betätigerdaten eines Betätigers (8), die in den Sicherheitsschalter (4) eingelesen werden, dessen Arbeitsweise und/oder dessen Betriebszustand vorgebbar ist.

9. Sicherheitseinrichtung (1) nach Anspruch 8, **dadurch gekennzeichnet, dass** durch die Betätigerdaten im Sicherheitsschalter (4) die Anzahl von akzeptierten Betätigern (8) vorgegeben oder geändert wird.

10. Sicherheitseinrichtung (1) nach einem der Ansprüche 8 oder 9, **dadurch gekennzeichnet, dass** durch die Betätigerdaten im Sicherheitsschalter (4) vorgebbar ist, welche Informationen von Betätigerdaten von Betätigern (8) akzeptiert werden.

11. Sicherheitseinrichtung (1) nach einem der Ansprüche 7 bis 10, **dadurch gekennzeichnet, dass** durch die Betätigerdaten Ausgangssignale vorgebbar sind, die vom Sicherheitsschalter (4) über die sichere Ausgangsstruktur (5) ausgegeben werden.

12. Sicherheitseinrichtung (1) nach einem der Ansprüche 1 bis 11, **dadurch gekennzeichnet, dass** über die sichere Ausgangsstruktur (5) des Sicherheitsschalters (4) Betätigerdaten, Teile von Betätigerdaten und/oder im Sicherheitsschalter (4) aus Betätigerdaten abgeleitete Daten an die Sicherheitssteuerung (3) übertragen werden.

13. Sicherheitseinrichtung (1) nach Anspruch 12, **dadurch gekennzeichnet, dass** mittels des Sicherheitsschalters (4), der Sicherheitssteuerung (3) und/oder einer separaten Schreibstation Informationen in einen Betätiger (8) fehlersicher eingeschrieben werden können.

14. Sicherheitseinrichtung (1) nach einem der Ansprüche 1 bis 13, **dadurch gekennzeichnet, dass** mehrere Sicherheitsschalter (4) vorgesehen sind, die in einem sicheren Bussystem integriert sind.

15. Verfahren zum Betrieb einer Sicherheitseinrichtung (1) mit einem Sicherheitsschalter (4), einer Anordnung von dem Sicherheitsschalter (4) zugeordneten Betätigern (8) und mit einer Sicherheitssteuerung (3), wobei der Sicherheitsschalter (4) ausgebildet ist Betätigerdaten aus jedem zugeordneten Betätiger (8) einzulesen und in Abhängigkeit der Daten des Betätigers (8) Sicherheitsschaltsignale zu generieren und an die Sicherheitssteuerung (3) auszugeben, **dadurch gekennzeichnet, dass** der Sicherheitsschalter (4) eine sichere Ausgangsstruktur (5) in Form einer sicheren seriellen Schnittstelle oder einer sicheren Busschnittstelle aufweist, über welche sämtliche Ausgangssignale ausgegeben werden.

## Claims

1. Safety system (1) with a safety switch (4), an arrangement of actuators (8) assigned to the safety switch (4) and a safety control (3), wherein the safety switch (4) is designed to read in actuator data from each assigned actuator (8) and, depending on the data from the actuator (8) and to output safety switching signals to the safety control (3), **characterised in that** the safety switch (4) has a safe output structure (5) in the form of a safe serial interface or a safe bus interface, via which all output signals are output.

2. Safety system (1) according to claim 1, **characterised in that** the actuator data of each actuator (8) contains identification data by means of which the actuator (8) can be reliably identified in the safety switch (4).

3. Safety system (1) according to claim 1, **characterised in that** the actuator data in the safety switch (4) is used to determine whether an authorised or unauthorised actuator (8) is present, whereby safety switching signals are generated in the safety switch (4) according to an authorised actuator (8) for the safety control (3).

4. Safety system (1) according to claim 3, **characterised in that** several actuators (8) are accepted as permissible on the basis of identical partial data in their actuator data in the safety switch (4).

5. Safety system (1) according to one of claims 1 to 4, **characterised in that** actuators (8) can be programmed individually or in groups in the safety switch (4).

6. Safety system (1) according to claim 5, **characterised in that**, in a group of actuators (8), part of the actuator data matches and only one actuator (8) is programmed on behalf of the entire group.

7. Safety system (1) according to one of claims 1 to 6, **characterised in** the actuator data of an actuator (8) contains information about properties and/or the condition of the object equipped with this actuator (8).

8. Safety system (1) according to one of claims 1 to 7, **characterised in that** the operating mode and/or operating state of an actuator (8) can be specified on the basis of actuator data from this actuator that is read into the safety switch (4).

9. Safety system (1) according to claim 8, **characterised in that** the number of accepted actuators (8) is specified or changed by the actuator data in the safety switch (4).

10. Safety system (1) according to one of claims 8 or 9, **characterised in that** the actuator data in the safety switch (4) can be used to specify which information from actuator data from actuators (8) is accepted.

11. Safety system (1) according to one of claims 7 to 10, **characterised in that** the actuator data can be used to specify output signals that are output by the safety switch (4) via the safe output structure (5).

12. Safety system (1) according to one of claims 1 to 11, **characterised in that** actuator data, parts of actuator data and/or data derived from actuator data in the safety switch (4) are transmitted to the safety control (3) via the safe output structure (5) of the safety switch (4).

13. Safety system (1) according to claim 12, **characterised in that** information can be written to an actuator (8) in a fail-safe manner by means of the safety switch (4), the safety controller (3) and/or a separate writing station.

14. Safety system (1) according to one of claims 1 to 13, **characterised in that** several safety switches (4) are provided, which are integrated into a safe bus system.

15. Method for operating a safety system (1) with a safety switch (4), an arrangement of actuators (8) associated with the safety switch (4) and with a safety control (3), wherein the safety switch (4) is designed to read in actuator data from each associated actuator (8) and, depending on the data from the actuator (8) and outputting safety switching signals to the safety control system (3), **characterised in that** the safety switch (4) has a safe output structure (5) in the form of a safe serial interface or a safe bus interface, via which all output signals are output.

## Revendications

1. Dispositif de sécurité (1) comprenant un interrupteur de sécurité (4), un ensemble d'actionneurs (8) associés à l'interrupteur de sécurité (4) et une commande de sécurité (3), dans lequel l'interrupteur de sécurité (4) est conçu pour lire les données d'actionneur provenant de chaque actionneur associé (8) et, en fonction des données provenant de l'actionneur (8), pour émettre des signaux de commutation de sécurité vers la commande de sécurité (3), **caractérisé en ce que** l'interrupteur de sécurité (4) comporte une structure de sortie sécurisée (5) sous la forme d'une interface série sécurisée ou d'une interface bus sécurisée, par l'intermédiaire de laquelle tous les signaux de sortie sont émis.

2. Dispositif de sécurité (1) selon la revendication 1, **caractérisé en ce que** les données d'actionneur de chaque actionneur (8) contiennent des données d'identification permettant d'identifier de manière fiable l'actionneur (8) dans le commutateur de sécurité (4).

3. Dispositif de sécurité (1) selon la revendication 1, **caractérisé en ce que** les données d'actionneur dans le commutateur de sécurité (4) sont utilisées pour déterminer si un actionneur (8) autorisé ou non autorisé est présent, ce qui en fonction des données d'actionneur permet de générer dans le commutateur de sécurité (4) des signaux de commutation de sécurité pour la commande de sécurité (3).

4. Dispositif de sécurité (1) selon la revendication 3, **caractérisé en ce que** plusieurs actionneurs (8) sont acceptés comme autorisés sur la base de données partielles identiques dans leurs données d'actionneur dans le commutateur de sécurité (4).

5. Dispositif de sécurité (1) selon l'une des revendications 1 à 4, **caractérisé en ce que** les actionneurs (8) peuvent être programmés individuellement ou en groupes dans le commutateur de sécurité (4).

6. Dispositif de sécurité (1) selon la revendication 5, **caractérisé en ce que**, dans un groupe d'actionneurs (8), une partie des données d'actionneur correspond et un seul actionneur (8) est programmé pour l'ensemble du groupe.

7. Dispositif de sécurité (1) selon l'une des revendications 1 à 6, **caractérisé en ce que** les données d'actionneur d'un actionneur (8) contiennent des informations sur les propriétés et/ou l'état de l'objet équipé dudit actionneur (8).

8. Dispositif de sécurité (1) selon l'une des revendications 1 à 7, **caractérisé en ce que** le mode de fonctionnement et/ou l'état de fonctionnement d'un actionneur (8) peuvent être spécifiés sur la base des données de l'actionneur provenant de cet actionneur qui sont lues dans l'interrupteur de sécurité (4).

9. Dispositif de sécurité (1) selon la revendication 8, **caractérisé en ce que** le nombre d'actionneurs (8) acceptés est spécifié ou modifié par les données d'actionneur dans le commutateur de sécurité (4).

10. Dispositif de sécurité (1) selon l'une des revendications 8 ou 9, **caractérisé en ce que** les données d'actionneur dans le commutateur de sécurité (4) peuvent être utilisées pour spécifier quelles informations provenant des données d'actionneur des actionneurs (8) sont acceptées.

11. Dispositif de sécurité (1) selon l'une des revendications 7 à 10, **caractérisé en ce que** les données d'actionneur peuvent être utilisées pour spécifier les signaux de sortie qui sont émis par le commutateur de sécurité (4) via la structure de sortie sécurisée (5).

12. Dispositif de sécurité (1) selon l'une des revendications 1 à 11, **caractérisé en ce que** les données d'actionneur, des parties des données d'actionneur et/ou des données dérivées des données d'actionneur dans le commutateur de sécurité (4) sont transmises à la commande de sécurité (3) via la structure de sortie sécurisée (5) du commutateur de sécurité (4).

13. Dispositif de sécurité (1) selon la revendication 12, **caractérisé en ce que** des informations peuvent être écrites sur un actionneur (8) de manière sécurisée au moyen du commutateur de sécurité (4), du contrôleur de sécurité (3) et/ou d'une station d'écriture séparée.

14. Dispositif de sécurité (1) selon l'une des revendications 1 à 13, **caractérisé en ce que** plusieurs commutateurs de sécurité (4) sont prévus, qui sont intégrés dans un système de bus de sécurité.

15. Procédé pour faire fonctionner un dispositif de sécurité (1) avec un interrupteur de sécurité (4), un agencement d'actionneurs (8) associés à l'interrupteur de sécurité (4) et à une commande de sécurité (3), dans lequel l'interrupteur de sécurité (4) est conçu pour lire les données d'actionneur de chaque actionneur associé (8) et, en fonction des données provenant de l'actionneur (8), pour émettre des signaux de commutation de sécurité vers le système de commande de sécurité (3), **caractérisé en ce que** l'interrupteur de sécurité (4) comporte une structure de sortie sécurisée (5) sous la forme d'une interface série sécurisée ou d'une interface de bus sécurisée, par l'intermédiaire de laquelle tous les signaux de sortie sont émis.
